# EUROPÄISCHE PATENTSCHRIFT

(11) **EP 4 302 074 B1**
(45) Veröffentlichungstag und Bekanntmachung des Hinweises auf die Patenterteilung: **23.04.2025**
(21) Anmeldenummer: 22710388.4
(22) Anmeldetag: 04.03.2022
(51) Int. Cl.: G01N 21/17, G01N 21/3504, G01N 21/3577, G01N 21/31

(54) **ANORDNUNG ZUR MULTISPEKTRALEN LICHTEMISSION SOWIE DAMIT AUSGESTATTETER MULTISPEKTRALSENSOR**
ASSEMBLY FOR A MULTISPECTRAL LIGHT EMISSION, AND MULTISPECTRAL SENSOR EQUIPPED THEREWITH
ENSEMBLE POUR UNE ÉMISSION DE LUMIÈRE MULTISPECTRALE ET CAPTEUR MULTISPECTRAL ÉQUIPÉ DE CELUI-CI

(30) Priorität: 05.03.2021 DE 102021105369; 08.04.2021 DE 102021108745
(43) Veröffentlichungstag der Anmeldung: 10.01.2024
(73) Patentinhaber: Fraunhofer-Gesellschaft zur Förderung der angewandten Forschung e.V., 80686 München (DE)
(72) Erfinder: GRAUNKE, Thorsten, 91058 Erlangen (DE); TSCHEKALINSKIJ, Wladimir, 90429 Nürnberg (DE); JUNGER, Stephan, 91058 Erlangen (DE); GARBAS, Jens-Uwe, 91058 Erlangen (DE)
(74) Vertreter: Gagel, Roland
(86) Internationale Anmeldenummer: PCT/EP2022/055557
(87) Internationale Veröffentlichungsnummer: WO 2022/184895

(56) Entgegenhaltungen:
- EP-A1- 3 458 835
- US-A1- 2012 059 232
- US-B2- 8 991 261

## Beschreibung

### Technisches Anwendungsgebiet

Die vorliegende Erfindung betrifft eine Anordnung zur multispektralen Lichtemission mit wenigstens einer breitbandigen Lichtquelle, die Licht eines spektralen Bereiches emittiert, einem Filterarray aus mehreren spektralen Filtern einer spektralen Breite, die innerhalb des spektralen Bereiches der Lichtquelle liegt, und einer optischen Schalteinrichtung zur Steuerung eines Durchgangs des von der Lichtquelle emittierten Lichts durch das Filterarray. Die Erfindung betrifft auch einen Multispektralsensor, der mit dieser Anordnung ausgestattet ist.

Zahlreiche Anwendungen zur selektiven Analyse von z.B. flüssigen oder gasförmigen Medien erfordern den Einsatz optischer Strahlung mit veränderbaren Wellenlängen oder Wellenlängenbereichen. Beispiele sind die Absorptionsspektroskopie oder die photoakustische Spektroskopie. So hat jedes Gas ein charakteristisches Absorptionsspektrum mit einem oder mehreren Absorptionspeaks (Fingerprint). Bei der photoakustischen Spektroskopie entsteht durch die spezifische Lichtabsorption bei einem Absorptionspeak eine Druckänderung bzw. akustische Welle im Medium, die erfasst und in ein elektrisches Signal umgewandelt wird. Als Detektor kann beispielsweise ein Mikrofon eingesetzt werden. Die erfasste Druckänderung ist ein Maß für die Konzentration des entsprechenden Gases. Mit einem photoakustischen Gassensor (PGS) kann eine große Anzahl an Stoffen in verschiedenen Aggregatszuständen bei sehr niedrigen Konzentrationen gemessen werden. Die Messungen erfordern jedoch eine Anpassung der Wellenlänge bzw. des Wellenlängenbereiches des eingestrahlten Lichtes an das zu vermessende Gas. Die Anregungswellenlänge kann beispielsweise mit Hilfe eines spektralen Filters oder durch Einsatz eines durchstimmbaren Lasers eingestellt werden. Die Anzahl der Gase, die mit einem photoakustischen Gassensor gleichzeitig gemessen werden kann, korreliert mit der Anzahl an optischen spektralen Kanälen dieses Gassensors.

### Stand der Technik

So zeigt beispielsweise die EP 3 508 836 B1 einen photoakustischen Gassensor, bei dem Licht einer breitbandigen IR-Lichtquelle durch einen Bandpassfilter in eine Messkammer mit dem zu vermessenden Gas geleitet wird. Der optische Bandpassfilter lässt nur einen bestimmten Teil des Lichtspektrums durch. Die Zentralwellenlänge des Filters ist auf das Absorptionsmaximum des nachzuweisenden Gases angepasst. Durch zeitliche Modulation der IR-Lichtquelle mit bis zu 100 Hz entsteht innerhalb der Messkammer durch die Absorption des Lichtes im Gas eine Schallwelle, die über einen hochempfindlichen Drucksensor an der Messkammer gemessen wird. Die gemessene Amplitude ist proportional zur Konzentration des absorbierenden Gases. Für viele Anwendungen ist ein derartiger Gassensor mit geringem Volumen, d.h. in miniaturisierter Form erforderlich, wie er sich aufgrund seines einfachen Aufbaus auch mit dem in der EP 3 508 836 B1 beschrieben Sensor realisieren lässt. Der Gassensor dieser Druckschrift ist jedoch nur mit einem spektralen Filter ausgestattet, kann also nur ein Gas mit Absorptionsmaximum bei der entsprechenden Filterwellenlänge nachweisen.

Prinzipiell besteht für eine Änderung der Anregungswellenlänge die Möglichkeit, ein Filterrad zwischen der Anregungslichtquelle und der Messkammer einzusetzen. Die Anzahl der Gase, die gleichzeitig gemessen werden kann, korreliert mit der Anzahl an verfügbaren optischen spektralen Kanälen, also mit der Anzahl der spektralen Filter. Die Anzahl an unterschiedlichen Filtern ist bei Filterrädern jedoch begrenzt. Durch die mechanische Baugröße ist eine Miniaturisierung sehr komplex und die Messzeit steigt mit der Anzahl an verbauten Filtern. Ein weiterer Nachteil des Filterrades besteht darin, dass immer nur ein Filter zur gleichen Zeit eingesetzt werden kann.

Bei Einsatz eines durchstimmbaren Lasers als Lichtquelle, insbesondere eines Quantenkaskadenlasers (QCL), werden keine spektralen Filter benötigt. Die Wellenlänge kann innerhalb des Abstimmbereiches des Lasers frei eingestellt werden. So kann beispielsweise durch Kombination mehrerer Quantenkaskadenlaser ein breiter spektraler Bereich lückenlos abgedeckt und damit eine Vielzahl an Gasen vermessen werden. Quantenkaskadenlaser sind jedoch relativ teuer. Durch die Notwendigkeit mehrerer Quantenkaskadenlaser zur Abdeckung eines breiten spektralen Bereiches steigen die Kosten nochmals. Eine weitere Miniaturisierung ist mit derartigen Lasern außerdem nicht möglich.

Daher sind derzeit kostengünstige photoakustische Sensoren nur mit einem einzigen Bandpassfilter wie bei der oben angeführten EP 3 508 836 B1 bekannt, mit denen in der Regel nur ein Gas gemessen werden kann. Für die selektive Analyse komplexer Proben auch im Sub-ppb-Bereich, wie sie durch photoakustische Sensoren ermöglicht wird, ist keine kostengünstige Lösung bei kleinem Formfaktor verfügbar.

Die Patentschrift US 8 991 261 B2 offenbart eine Anordnung zur multispektralen Lichtemission gemäß dem Oberbegriff von Anspruch 1.

Die US 2012/059232 A1 offenbart eine Anordnung zur multispektralen Lichtemission mit einem Array monochromatischer LEDs, die einzeln ansteuerbar sind.

Die Aufgabe der vorliegenden Erfindung besteht darin, eine Anordnung zur multispektralen Lichtemission und einen darauf basierenden multispektralen Sensor anzugeben, die sich kostengünstig in miniaturisierter Bauweise realisieren lassen. Die Anordnung soll insbesondere eine Änderung einfache und schnelle Anpassung bzw. Änderung der emittierten Wellenlängen ermöglichen.

### Darstellung der Erfindung

Die Aufgabe wird mit den Anordnungen der Patentansprüche 1 und 2 und dem Multispektralsensor gemäß Patentanspruch 8 gelöst. Vorteilhafte Ausgestaltungen der Anordnungen sowie des Multispektralsensors sind Gegenstand der abhängigen Patentansprüche oder lassen sich der nachfolgenden Beschreibung sowie den Ausführungsbeispielen entnehmen.

Die vorgeschlagene Anordnung zur multispektralen Lichtemission weist wenigstens eine breitbandige Lichtquelle, ein Filterarray und eine Schalteinrichtung zur Steuerung des Durchgangs zumindest eines Anteils des von der Lichtquelle emittierten Lichts durch das Filterarray auf. Die breitbandige Lichtquelle emittiert Licht eines bestimmten spektralen Bereiches. Die spektralen Filter des Filterarrays weisen eine entsprechend geringere spektrale Breite auf, die wenigstens zum Teil innerhalb des spektralen Bereiches der Lichtquelle liegt. Vorzugsweise ist die spektrale Breite der spektralen Filter kleiner als 1 µm.

Bei einer ersten Alternative der vorgeschlagenen Anordnung ist die Schalteinrichtung als optische Schalteinrichtung ausgebildet und Lichtquelle, Filterarray und optische Schalteinrichtung sind so angeordnet, dass von der Lichtquelle emittiertes Licht über die optische Schalteinrichtung, gegebenenfalls auch über weitere optische Elemente wie z.B. Umlenkelemente oder Linsen, und das Filterarray zum Ausgang der Anordnung geleitet wird, an dem das entsprechend gefilterte Licht aus der Anordnung austritt. Die optische Schalteinrichtung weist dabei ein Array aus Mikrospiegeln oder Mikroblenden auf und ist so ausgebildet und angeordnet, dass sie von der Lichtquelle emittiertes Licht gezielt nur durch einen oder mehrere beliebig vorgebbare spektrale Filter des Filterarrays zum Ausgang der Anordnung leiten kann. Die optische Schalteinrichtung lässt sich hierzu entsprechend ansteuern.

Bei der zweiten Alternative weist die Lichtquelle entweder ein Array von getrennt über die Schalteinrichtung ansteuerbaren Lichtemittern auf und ist so ausgebildet und angeordnet, dass durch die Ansteuerung der Lichtemitter über die Schalteinrichtung von der Lichtquelle emittiertes Licht gezielt nur durch einen oder mehrere beliebig vorgebbare spektrale Filter des Filterarrays geleitet werden kann. In einer anderen Ausgestaltung dieser zweiten Alternative ist die Lichtquelle durch einen einzelnen Lichtemitter gebildet und die Schalteinrichtung weist eine mechanische XY-Verstelleinrichtung für diesen Einzelemitter oder das Filterarray auf, mit der der Einzelemitter unter unterschiedlichen Filtern des Filterarrays positioniert werden kann, so dass das von der Lichtquelle emittierte Licht gezielt nur durch einen beliebig vorgebbaren spektralen Filter des Filterarrays geleitet werden kann. Die lichtabstrahlende Fläche der Lichtemitter ist bei dieser zweiten Alternative der Anordnung vorzugsweise nicht größer als die lateralen Abmessungen der einzelnen spektralen Filter des Filterarrays.

In einer bevorzugten Ausgestaltung weisen die einzelnen spektralen Filter des Filterarrays geringe laterale Abmessungen von ≤ 10x10 mm auf. Das Filterarray ist vorzugsweise so ausgebildet, dass die spektralen Filter zeilen- und spaltenweise in dem Filterarray angeordnet sind. Prinzipiell ist jedoch auch eine andere Anordnung, beispielsweise eine konzentrische Anordnung, eine rein zeilenförmige Anordnung oder auch eine vollkommen beliebige Anordnung der einzelnen Filter im Filterarray möglich. Vorzugsweise korreliert die Anordnung der einzelnen spektralen Filter des Filterarrays mit der Anordnung der Mikrospiegel oder Mikroblenden der ersten Alternative oder mit der Anordnung der einzelnen Lichtemitter des Arrays aus Lichtemittern der zweiten Alternative, so dass diese jeweils in gleicher Weise angeordnet sind, also bspw. entsprechend zeilen- und spaltenweise. Die Anzahl der auf Seiten der optischen Schalteinrichtung oder der Lichtquelle vorhandenen Einheiten (Mikrospiegel, Mikroblenden, Lichtemitter) entspricht vorzugsweise der Anzahl der spektralen Filter des Filterarrays, so dass jeder Einheit ein spektraler Filter zugeordnet ist, durch den ausschließlich das von der zugeordneten Einheit ausgehende Licht geleitet wird. Es besteht auch die Möglichkeit, die Anzahl der Filter größer als die Anzahl dieser Einheiten zu wählen, wobei dann jeweils jeder Einheit eine Gruppe von nebeneinander angeordneten spektralen Filtern, beispielsweise zwei oder vier Filter, zugeordnet ist. Weiterhin besteht die die Möglichkeit, die Anzahl der Filter kleiner als die Anzahl dieser Einheiten zu wählen, wobei dann jeweils jedem Filter mehrere nebeneinander angeordnete Einheiten zugeordnet sind.

Die vorgeschlagene Anordnung ermöglicht eine Anpassung oder Variation der Wellenlänge oder spektralen Verteilung der emittierten optischen Strahlung entsprechend der Anzahl und Charakteristiken der unterschiedlichen Filter des Filterarrays. Damit lässt sich die spektrale Verteilung des emittierten Lichts für die jeweilige Anwendung anpassen. Durch den gewählten Aufbau lassen sich das Filterarray und die Lichtquelle ebenso wie die optische Schalteinrichtung miniaturisiert ausführen. Die Anordnung benötigt keine teuren Lichtquellen.

Vorzugsweise werden Filter auf Basis von SubWellenlängen-Strukturen oder plasmonische Filter im Filterarray eingesetzt. Dadurch kann eine Vielzahl von Filtern kostengünstig auf kleinstem Raum realisiert werden. Dies ermöglicht beispielsweise die Nachbildung eines Absorptionsspektrums für fast jeden Stoff durch geeignete Kombination der einzelnen optischen Kanäle bzw. Filter, indem also gleichzeitig Licht durch mehrere der spektralen Filter geleitet wird. Die Filter können auch als Interferenzfilter ausgebildet sein und auch mit Polarisationsfiltern kombiniert sein. Auch eine Kombination dieser Filtertypen innerhalb des Filterarrays ist prinzipiell möglich.

Die optische Schalteinrichtung kann bei der ersten Alternative zusammen mit der Lichtquelle als ein Modul oder auch getrennt von der Lichtquelle realisiert werden. Die arrayförmige Lichtquelle kann bei der zweiten Alternative wiederum zusammen mit dem Filterarray als ein Modul ausgeführt oder auch getrennt davon ausgebildet sein. Zusätzlich ist bei beiden Alternativen auf dem Strahlweg zwischen der Lichtquelle und dem Filterarray auch eine Einrichtung zur Vermeidung eines optischen Übersprechens zwischen den einzelnen optischen Kanälen angeordnet, beispielsweise in Form eines geeignet ausgebildeten Blenden- und/oder Linsenarrays.

Mit der vorgeschlagenen Anordnung lässt sich ein Multispektralsensor mit einer Messkammer, in die aus der Anordnung austretendes Licht eingekoppelt wird, und einem oder mehreren Detektoren realisieren, durch die das Resultat einer Wechselwirkung des in die Messkammer eingekoppelten Lichts mit einem in die Messkammer eingebrachten Medium erfassbar ist. So lässt sich der Multispektralsensor beispielsweise als photoakustischer Gassensor ausbilden, bei dem dann wenigstens einer der Detektoren ein Drucksensor, beispielsweise ein Mikrofon ist. In diesem Fall wird dann die Lichtquelle der vorgeschlagenen Anordnung bei einer Messung geeignet zeitlich moduliert, um durch die Absorption des in die Messkammer eingekoppelten Lichts in dem zu messenden Gas Schallwellen zu erzeugen. Mit diesem Gassensor kann dann entsprechend der Anzahl an Filtern des Filterarrays eine größere Anzahl an Gasen oder Gaskomponenten vermessen. Auch andere Anwendungen, wie beispielsweise Absorptionsspektroskopie, auch in Kombination mit der photoakustischen Spektroskopie, lassen sich mit einem derartigen Multispektralsensor realisieren.

Die vorgeschlagene Anordnung sowie der damit ausgestattete Multispektralsensor lassen sich in vielen Anwendungsbereichen, beispielsweise in der Medizin, im Umweltbereich, in der Verfahrenstechnik und der zivilen Sicherheit einsetzen. Dies umfasst beispielsweise die Analyse industrieller Prozesse und Parameter (Prozessmonitoring), die Qualitätssicherung, die Brandfrüherkennung, die Aromaanalyse, die Detektion von Fehlgerüchen, die Atemgasanalyse, Sicherheitsapplikationen, Umweltanalysen, zerstörungsfreie Oberflächenuntersuchungen über Reflexionsmessung, eine Anwendung als elektronische Nase oder elektronische Zunge. Dies ist selbstverständlich keine abschließende Aufzählung.

### Kurze Beschreibung der Zeichnungen

Die vorgeschlagene Anordnung und der damit ausgestattete Multispektralsensor werden nachfolgend anhand von Ausführungsbeispielen in Verbindung mit den Zeichnungen nochmals näher erläutert. Hierbei zeigen:
- Fig. 1: eine schematische Darstellung eines Multispektralsensors mit einer optischen Schalteinrichtung;
- Fig. 2: ein Beispiel einer flexiblen Anpassung des Lichtspektrums mit der vorgeschlagenen Anordnung an das Absorptionsspektrum eines zu vermessenden Gases;
- Fig. 3: eine schematische Darstellung eines Multispektralsensors mit einer arrayförmigen Lichtquelle;
- Fig. 4: ein Beispiel für eine Ausgestaltung der vorgeschlagenen Anordnung auf Basis einer arrayförmigen Lichtquelle;
- Fig. 5: ein erfindungsgemäßes Beispiel für eine Ausgestaltung der vorgeschlagenen Anordnung auf Basis einer arrayförmigen Lichtquelle;
- Fig. 6: ein Beispiel für eine erfindungsgemäße Ausgestaltung der vorgeschlagenen Anordnung mit einem Mikroblendenarray als optischer Schalteinrichtung;
- Fig. 7: ein Beispiel für eine Ausgestaltung der vorgeschlagenen Anordnung auf Basis eines Einzelemitters mit einer mechanischen XY-Verstelleinrichtung;
- Fig. 8: ein erstes Beispiel für einen Aufbau des vorgeschlagenen Multispektralsensors;
- Fig. 9: ein Beispiel für eine Ausgestaltung der vorgeschlagenen Anordnung mit einem Mikrospiegelarray als optischer Schalteinrichtung;
- Fig. 10: ein Beispiel für ein Mikrospiegelarray, bei dem die spektralen Filter des Filterarrays auf die Mikrospiegel aufgebracht sind;
- Fig. 11: ein zweites Beispiel für einen Aufbau des vorgeschlagenen Multispektralsensors;
- Fig. 12: ein Beispiel für eine Ausgestaltung des vorgeschlagenen Multispektralsensor mit mehreren Messkammern;
- Fig. 13: ein Beispiel für ein bei der vorgeschlagenen Anordnung einsetzbares Filterarray; und
- Fig. 14: ein Beispiel für eine Ausgestaltung eines spektralen Filters des bei der vorgeschlagenen Anordnung einsetzbaren Filterarrays mit Polarisationsfiltern.

### Wege zur Ausführung der Erfindung

Nicht alle in den Figuren dargestellten Anordnungen enthalten alle erfindungsgemäßen Merkmale. Die Erfindung ist durch die beigefügten Ansprüche definiert.

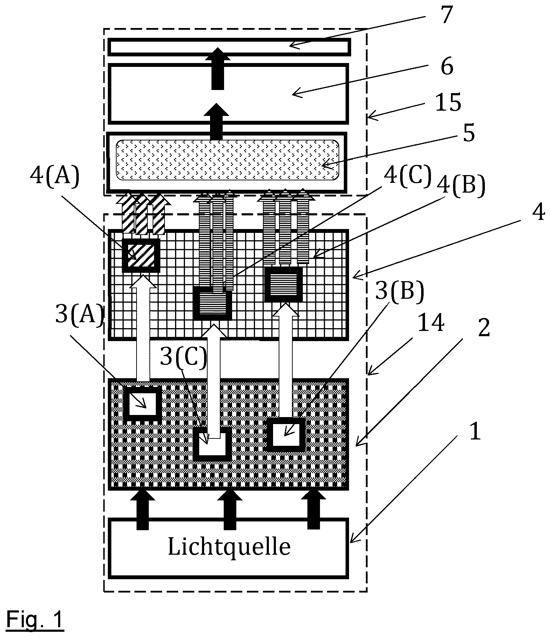

In Figur 1 ist stark schematisiert der Aufbau eines Multispektralsensors dargestellt, der sich aus der vorgeschlagenen Anordnung zur multispektralen Lichtemission 14 und einer Messeinrichtung 15 zusammensetzt. Von der Anordnung 14 erzeugtes Licht der gewünschten spektralen Verteilung tritt am Ausgang dieser Anordnung aus und in die Messeinrichtung 15 ein, wie dies in der Figur angedeutet ist. Die Anordnung zur multispektralen Lichtemission 14 weist eine breitbandige Lichtquelle 1, eine im Folgenden als optisches Schalterarray 2 bezeichnete Einrichtung und ein Filterarray 4 auf. Die Messeinrichtung 15 weist eine Messkammer 5, einen oder mehrere Empfänger 6 sowie eine elektronische Einrichtung 7 zur Signalverarbeitung und Auswertung auf. Licht der Lichtquelle 1 wird über das optische Schalterarray 2 (optische Schalteinrichtung) auf das Filterarray 4 geleitet. Das optische Schalterarray 2 ist so ausgebildet, dass es das Licht auf einen oder mehrere ausgewählte Filter 4(A), 4(B), 4 (C) führt.

Bei einer Ausführung in Transmission wird das optische Schalterarray 2 durch ein Mikroblendenarray realisiert, bei dem jedes Element 3(A), 3(B), 3(C), im Folgenden auch als optischer Schalter bezeichnet, eine Mikroblende darstellt, die jeweils unabhängig von den anderen zum Öffnen und Schließen angesteuert werden kann. Auch eine Ansteuerung zur Veränderung des Öffnungsdurchmessers (bei offener Blendenöffnung) ist vorzugsweise möglich. Über die jeweils ausgewählten Mikroblenden wird das Licht dann auf eine oder mehrere der Filter des Filterarrays 4 geführt. Die restlichen Blenden sind verschlossen.

Bei einer Ausführung in Reflexion ist das optische Schalterarray 2 als Mikrospiegelarray ausgeführt. Jedes Element des Schalterarrays ist ein Mikrospiegel. Die Spiegel können wiederum einzeln so angesteuert werden, dass das auftreffende Licht auf ein oder mehrere Filter 4(A), 4(B), 4(C) des Filterarrays 4 gelenkt wird. Die anderen Spiegel sind so eingestellt, dass sie das auftreffende Licht nicht auf das Filterarray 4 lenken. Bereiche zwischen den Mikrospiegeln (oder Mikroblenden im obigen Fall) sind für das Licht nicht transparent ausgeführt.

Das Filterarray 4 besteht aus mehreren spektralen Filtern. In dem in Figur 1 dargestellten Beispiel werden nur die Filter bzw. Filterelemente 4(A), 4(B), 4(C) belichtet und lassen damit nur bestimmte Wellenlängen entsprechend den Filtercharakteristiken dieser Filter passieren und in die Messkammer 5 eintreten. Mit dem optischen Schalterarray 2 können beliebige Filter des Filterarrays 4 nacheinander oder gleichzeitig mit Licht durchstrahlt werden, um ein optimales Spektrum für die jeweilige Messaufgabe zu generieren. Als Beispiel können wie bei einer Messung mit einem Monochromator die benötigten Filter nacheinander angesteuert bzw. belichtet werden. So kann beispielsweise durch alleinige Ansteuerung des Elementes 3(A) zur Belichtung des Filters 4(A) Licht einer einzelnen Wellenlänge kann erzeugt werden, falls der Filter 4(A) entsprechend schmalbandig ausgeführt ist.

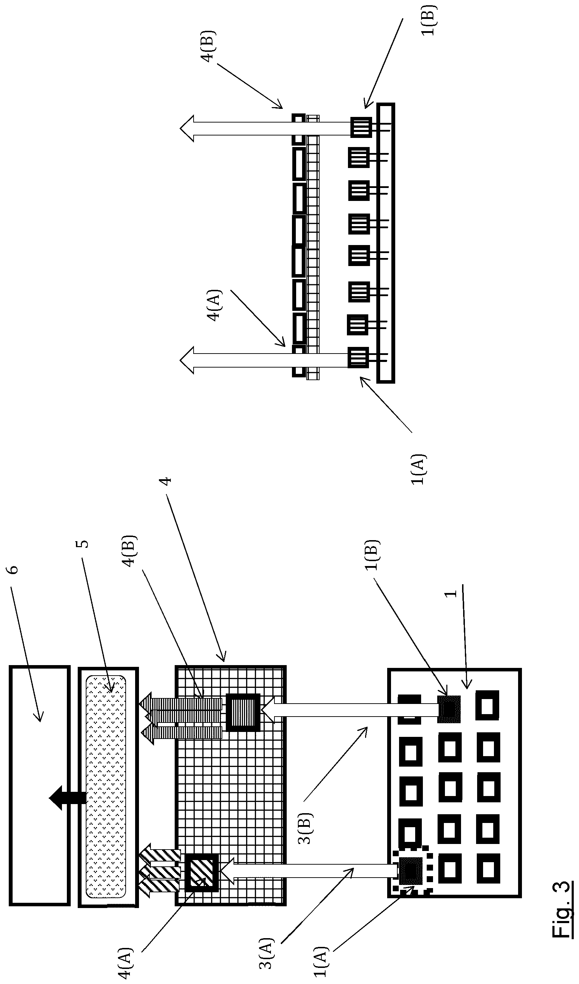

In einer weiteren Ausgestaltung kann die Lichtquelle 1 als Array von Lichtemittern ausgebildet sein, wie dies nachfolgend in Verbindung mit Figur 3 noch näher beschrieben wird. Die einzelnen Lichtemitter können beliebig angesteuert werden, um Licht gezielt auf ein oder mehrere Filter des Filterarrays 4 zu führen. Vorzugsweise bilden die Lichtquelle und das bei Filterarray hierbei eine Einheit. In dieser Ausgestaltung wird kein optisches Schalterarray 2 benötigt.

Die zu vermessende Probe befindet sich in der Messkammer 5. Sie kann in verschiedenen Aggregatzuständen vorliegen, beispielsweise als Flüssigkeit oder als Gas. Die Messung kann in Reflexion oder in Transmission erfolgen. Als Empfänger 6 können unterschiedliche Sensoren oder Detektoren mit unterschiedlichen physikalischen Messprinzipien verwendet werden. Beispiele sind IR-Detektoren für die Absorptionsspektroskopie oder ein Drucksensor, beispielsweise in Form eines oder mehrerer MEMS-Mikrofone, in der photoakustischen Spektroskopie. Es ist auch eine Kombination mehrerer Detektoren bzw. Sensoren möglich, beispielsweise die Nutzung eines Drucksensors in einer lichtdurchlässigen Messkammer in Verbindung mit einem Absorptionsdetektor außerhalb der Messkammer.

Bei einer Messung können somit durch geeignete Ansteuerung des Schalterarrays 2 oder der Lichtemitter im Falle eines Arrays aus Lichtemittern beliebig ein oder mehrere Filter des Filterarrays 4 genutzt werden, um dadurch eine gewünschte spektrale Verteilung, beispielsweise nur eine einzelne Wellenlänge oder eine Überlagerung bestimmter Wellenlängen, erzeugen und für die Anwendung nutzen zu können. Eine Änderung dieser spektralen Verteilung ist jederzeit durch eine andere Ansteuerung möglich. Die Ansteuerung, die Ausgabe der erfassten Daten, die Signalverarbeitung und Auswertung werden über eine Elektronik und Software realisiert.

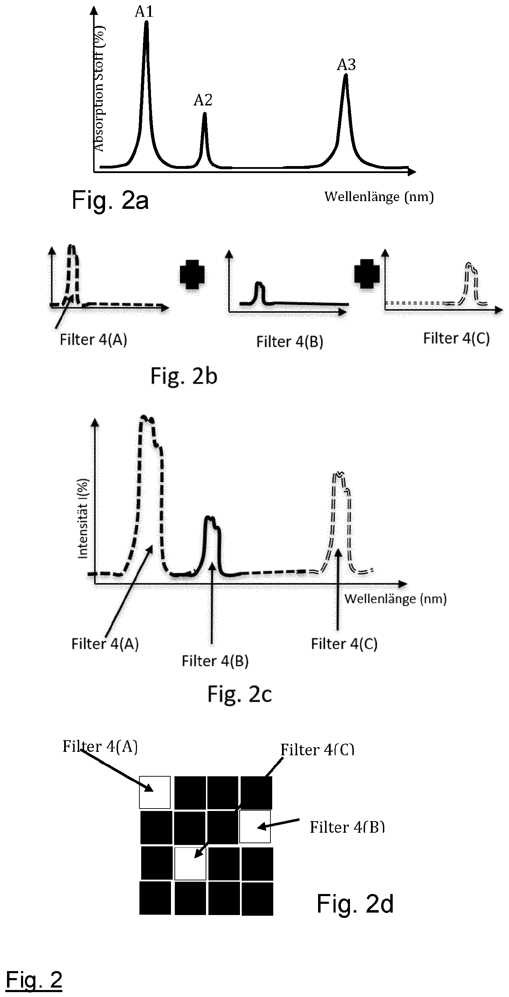

So lässt sich das durch die vorgeschlagene Anordnung erzeugte Lichtspektrum flexibel an das Absorptionsspektrum einer Probe in der Messkammer anpassen. In Figur 2 ist ein Beispiel für eine derartige flexible Anpassung dargestellt. Figur 2a zeigt hierzu ein abstraktes Absorptionsspektrum eines zu vermessenden Stoffes. Dieser Stoff hat drei charakteristische Absorptionspeaks (A1, A2, A3). Dieses Absorptionsspektrum kann über eine Kombination geeigneter Elemente des optischen Schalterarrays 2 und des Filterarrays 4 nachgebildet werden. Im vorliegenden Beispiel sind die optischen Schalter 3(A), 3(B), 3(C) geöffnet und die Filter 4(A), 4(B) und 4(C) aus dem Filterarray 4 werden dadurch belichtet. Es können in bestimmten Ausgestaltungen nicht nur die Positionen der einzelnen Absorptionspeaks nachgebildet, sondern auch die Amplitudenverhältnisse zwischen den Peaks eingestellt werden. Figur 2b zeigt die drei Einzelspektren der Filter 4(A), 4(B), 4(C). Die gleichzeitig belichteten Filter des Filterarrays 4 sind in Figur 2d weiß dargestellt, die unbelichteten schwarz. Figur 2c zeigt das komplette Spektrum 4(A) + 4(B) + 4(C) des Lichtes nach dem Filterarray 4. Dieses Lichtspektrum ist optimal an das in Fig. 2a dargestellte Absorptionsspektrum des zu vermessenden Stoffes angepasst. Eine Intensitätsanpassung kann über eine Anpassung von Parametern wie beispielsweise dem Strom für die einzelnen Lichtemitter bei Nutzung eines Lichtemitter-Arrays ohne optisches Schalterarray oder über den Transmissionsgrad des optischen Schalterarrays eingestellt werden. Letzteres betrifft insbesondere die Nutzung eines Mikroblendenarrays mit anpassbarer Blendenöffnung oder die Nutzung eines auf Flüssigkristallen basierenden Mikroblendenarrays, bei dem der Transmissionsgrad einstellbar ist.

Figur 3 zeigt ein Beispiel für eine Ausgestaltung des vorgeschlagenen Multispektralsensors und der dabei eingesetzten Anordnung zur multispektralen Lichtemission, bei dem die Lichtquelle 1 durch ein Array aus einer Vielzahl von einzelnen Lichtemittern 1(N) gebildet ist. In der linken Teilabbildung ist hierbei schematisch der Aufbau des Multispektralsensors, in der rechten Teilabbildung der Aufbau der zugehörigen Anordnung dargestellt. Bei dieser Ausgestaltung wird keine optische Schalteinrichtung wie bei Figur 1 benötigt. Die einzelnen Lichtemitter der arrayförmigen Lichtquelle 1 können einzeln angesteuert bzw. nach Bedarf ein- und ausgeschaltet werden. Dies ermöglicht eine flexible Anpassung des von der Anordnung emittierten Lichtspektrums an das Absorptionsspektrum der zu vermessenden Probe in gleicher Weise wie dies bereits in Verbindung mit den Figuren 1 und 2 erläutert wurde. In dem Beispiel der Figur 3 sind die beiden Lichtemitter 1(A), 1(B) eingeschaltet, die übrigen Lichtemitter der Lichtquelle 1 sind ausgeschaltet. Dadurch werden auf dem darüber angeordneten Filterarray 4 nur die Filter 4(A) und 4(B) belichtet, wie dies schematisch in der Figur angedeutet ist. In diesem Beispiel weisen die lichtemittierenden Flächen der Lichtemitter 1 eine Ausdehnung auf, die geringer als die Abmessungen der Filter 4(N) des Filterarrays 4 sind, wie dies in der rechten Teilabbildung der Figur 3 angedeutet ist. Durch ausreichend geringen Abstand zwischen dem Filterarray 4 und der Lichtquelle 1 können dann durch geeignete Ansteuerung der einzelnen Lichtemitter 1(N) jeweils nur die Filter des Filterarrays 4 belichtet werden, die sich genau über dem jeweiligen Lichtemitter befinden.

Vorzugsweise wird hierbei als Lichtquelle 7 ein Array aus IR-Lichtquellen verwendet, das Licht eines Spektralbereiches von 1 µm bis 15 µm emittiert. Damit kann beispielsweise eine gasförmige Probe in der Messkammer 5 durch photoakustische Spektroskopie vermessen werden. Als Empfänger 6 werden dann ein oder mehrere Drucksensoren, beispielsweise in Form einer oder mehrerer Mikrofone, eingesetzt. So kann bei der Ausgestaltung gemäß Figur 3 kann als arrayförmige Lichtquelle z.B. ein Array aus sogenannten Mikroheatern eingesetzt werden, wie es beispielsweise in L.D. Williams et al., "Design and characterization of a microheater array device fabricated with SwIFT-Lite™", J. Micro/Nanolith. MEMS MOEMS 7(4), 043035 (2008) beschrieben wird. Ein derartiges Array kann mit Hilfe der MEMS-Technologie hergestellt werden.

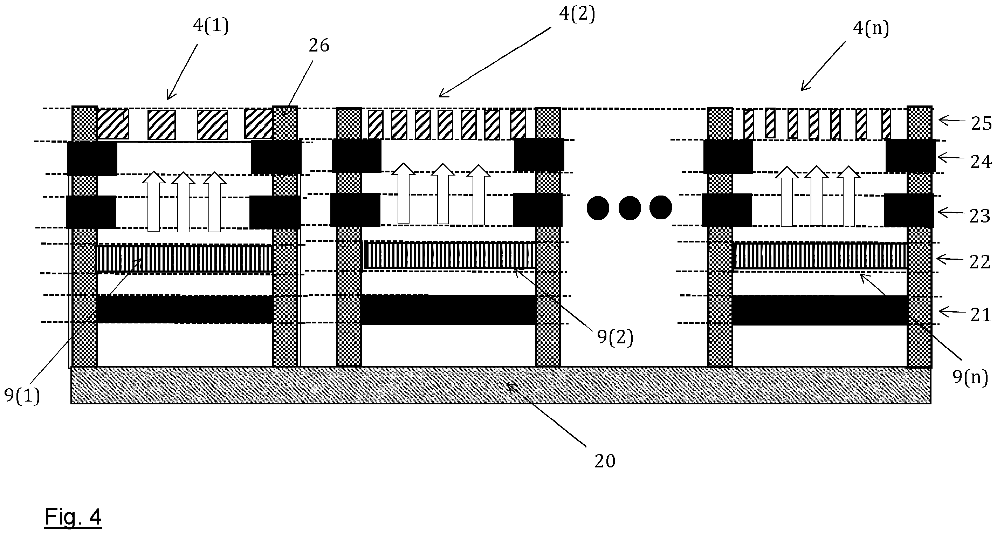

Figur 4 zeigt ein weiteres Beispiel einer Anordnung zur multispektralen Lichtemission mit einer arrayförmigen Lichtquelle. Eine derartige Anordnung könnte daher ebenfalls bei einem Multispektralsensor gemäß Figur 3 eingesetzt werden. In diesem Beispiel bilden das Filterarray und die arrayförmige Lichtquelle eine Einheit. Figur 4 zeigt hierzu ein Array aus monolithisch aufgebauten spektralen Kanälen. Ein spektraler Kanal ist eine Kombination aus Lichtquelle bzw. Lichtemitter 9(1), 9(2) ... 9 (n) und Filter 4(1), 4 (2), ... 4(n) des Filterarrays. Das in Figur 4 dargestellte Array kann mittels Halbleitertechnologie oder durch Post-Processing hergestellt werden. Auf einem Substrat 20 kann auf diese Weise die gewünschte Anzahl spektraler Kanäle als Array angeordnet werden. Sowohl die einzelnen Filter, die beispielsweise als plasmonische Filter oder Filter auf Basis von SubWellenlängen-Strukturen ausgebildet sein können, als auch die Lichtquelle, beispielsweise in Form von MEMS-Mikroheatern, können in Halbleitertechnologie realisiert werden. Die Filter können hierbei aus einer oder mehreren strukturierten Metallschichten oder dielektrischen Schichten bestehen. Figur 4 zeigt einen Querschnitt einer derartigen Einheit. Aus der Figur ist deutlich der schichtförmige Aufbau aus mehreren Schichten 21-25 auf dem Substrat 20 mit den Durchkontaktierungen bzw. Vias 26 zu erkennen, wie er bei Halbleiterprozessen häufig genutzt wird. In diesem Beispiel stellt Schicht 22 das IR-Lichtquellenarray mit den Lichtemittern 9(1), 9(2) ... 9(n) dar. Die IR-Lichtquellen können bspw. durch Mikrospiralen oder Mikroheater realisiert sein. Das Filterarray mit den Filtern 4(1), 4 (2) ... 4(n) ist in der obersten Schicht 25 realisiert. Jeder Filter kann aus einer oder mehreren Einzelschichten aufgebaut sein. Die Filterschichten können aus mindestens einer arrayförmigen, in Sub-Wellenlängendimensionen strukturierten Metallschicht oder einer dielektrischen Schicht aufgebaut sein. Für jeden spektralen Kanal können die Filtereigenschaften frei definiert werden. Die optischen Eigenschaften der Filter sind von der Strukturgröße, der Strukturform (z.B. Löcher oder Inseln) und der Periodizität abhängig und können über das Filterdesign definiert werden. Auch die Filterarrays bei den Ausgestaltungen mit einer optischen Schalteinrichtung können in dieser Weise realisiert sein. Die Schicht 21 stellt eine der Schichten eines typischen Schichtaufbaus bei einem Halbleiterprozess dar und kann z.B. auch als Reflektor für die Lichtquelle in Schicht 22 dienen. In den Schichten 23, 24 sind geeignete Öffnungen für den Durchtritt des Lichts ausgebildet. Diese Schichten bestehen in der Regel jeweils aus einem metallischen Material und sind durch dielektrische Schichten voneinander getrennt. Die Vias 26 verhindern einen Übertritt von Licht zwischen den einzelnen spektralen Kanälen in diesem Array.

Beispiele für geeignete infrarote optische Filter finden sich in I.J.H. McCrindle et al., "Infrared plasmonic filters integrated with an optical and terahertz multi-spectral material", Phys. Status Solidi A 212, No. 8, 1625 bis 1633 (2015) und in A. Wang et al., "Mid-infrared plasmonic multispectral filters", Scientific Reports (2018) 8: 11257. Die in diesen Veröffentlichungen dargestellten Filter basieren auf strukturierten Metallschichten und können über Finite-Difference Time-Domain (FDTD) modelliert werden. Durch die Simulation kann das Design der Filter für die gewünschte spektrale Transmission, die Bandbreite und die Position der Zentralwellenlänge bestimmt werden.

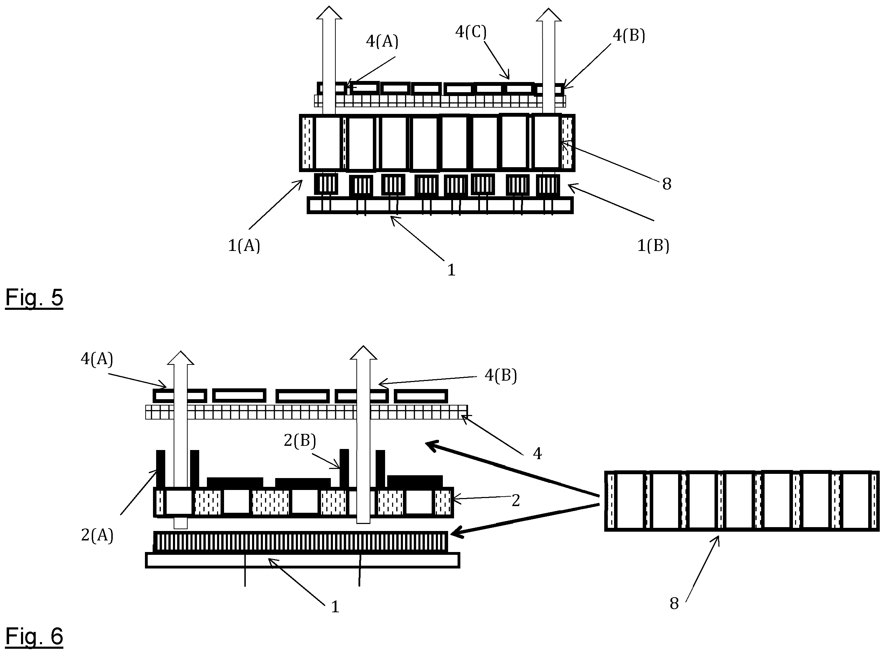

Figur 5 zeigt eine erfindungsgemäße Modifikation der Anordnung zur multispektralen Lichtemission der Figur 3. Da bei dieser Anordnung Lichtquelle 1 und Filterarray 4 separat gefertigt und übereinander angeordnet werden, entsteht ein Freiraum zwischen der Lichtquelle 1 und dem Filterarray 4. Um ein optisches Übersprechen zwischen den einzelnen optischen Kanälen zu verhindern, wird im Beispiel der Figur 5 ein geeignet ausgebildetes Blenden- oder Linsenarray 8 in diesem Freiraum angeordnet, das ein optisches Übersprechen zwischen den einzelnen Kanälen verhindert. Ohne dieses Blenden- oder Linsenarray 8 könnte das Licht eines Lichtemitters gegebenenfalls nicht nur auf den unmittelbar darüber befindlichen Filter, sondern auch auf benachbarte Filter treffen. So trifft beispielsweise das Licht aus dem Lichtemitter 1(B) durch die Verwendung dieses Blenden- oder Linsenarrays 8 nur auf den darüber befindlichen Filter 4(B). Ohne das Blenden- oder Linsenarray 8 würde aufgrund des großen Abstrahlwinkels des Lichtemitters 1(B) dessen Licht auch benachbarte Filter treffen, beispielsweise auf Filter 4(C).

In Figur 6 ist ein Beispiel für eine erfindungsgemäße Anordnung zur multispektralen Lichtemission dargestellt, bei der als optisches Schalterarray 2 über der Lichtquelle 1 ein Mikroblendenarray eingesetzt wird. Ein derartiges Mikroblendenarray kann beispielsweise in MEMS-Technologie gefertigt werden, wie dies z.B. aus M.J. Li et al., "Fabrication of Microshutter Arrays for Space Application", Proceedings of SPIE vol. 4407 (2001), 295 bis 303, bekannt ist. In dem Beispiel der Figur 6 sind die Shutter bzw. Mikroblenden 2(A) und 2(B) geöffnet und die Filter 4(A) und 4(B) werden belichtet. Die restlichen Mikroblenden sind geschlossen und die dazu gehörigen Filter werden nicht belichtet. Die Elemente des Blendenarrays können einzeln oder als Gruppe zum Öffnen und Schließen angesteuert werden. Dadurch kann das von der Anordnung ausgestrahlte Lichtspektrum wie in den vorangegangenen Beispielen flexibel an das Absorptionsspektrum einer Probe angepasst werden. Das Mikroblenden- bzw. optische Schalterarray 2 und die darunter befindliche Lichtquelle 1 können als eine Einheit realisiert werden. Zur Vermeidung des Übersprechens zwischen einzelnen Kanälen ist auch hier sowohl zwischen Lichtquelle 1 und optischem Schalterarray 2 als auch zwischen optischem Schalterarray 2 und Filterarray 4 ein zusätzliches Blenden- oder Linsenarray 8 angeordnet, wie dies in der linken Teilabbildung der Figur 6 angedeutet ist.

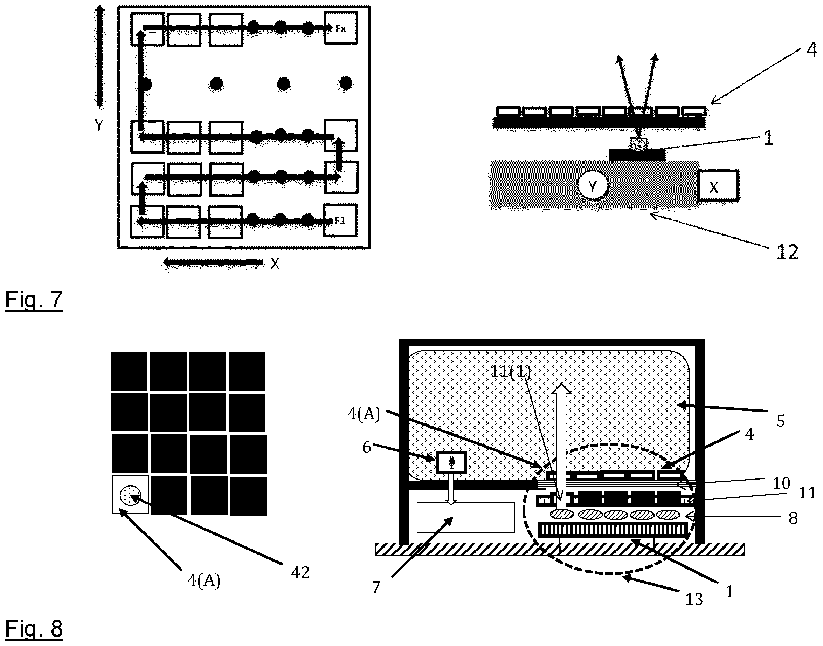

Figur 7 zeigt ein weiteres Beispiel für eine mögliche Ausgestaltung der vorgeschlagenen Anordnung zur multispektralen Lichtemission. Bei dem Beispiel der Figur 7 wird ein einzelner Lichtemitter als Lichtquelle 1 verwendet, der über einen mechanischen XY-Versteller 12 unter dem Filterarray 4 verfahren werden kann. Auch hier kann zusätzlich ein Blenden- oder Linsenarray 8 wie bei einigen der vorangehenden Ausführungsbeispiele zur Vermeidung des optischen Übersprechens integriert sein. Dadurch wird der Abstrahlwinkel begrenzt und es wird kein jeweils benachbarter Filter unerwünscht belichtet. In dem vorliegenden Beispiel befindet sich das Filterarray 4 auf einem für das Licht der Lichtquelle transparenten Substrat, beispielsweise aus Si bei einer IR-Lichtquelle. Die Lichtquelle 1 befindet sich auf dem XY-Versteller 12. Das Filterarray 4 wird je nach gewünschtem Filter bzw. der daraus resultierenden spektralen Charakteristik mit der Lichtquelle 1 abgescannt. So können nacheinander unterschiedliche spektrale Charakteristiken erzeugt werden, wie dies in der linken Teilabbildung der Figur 7 in Draufsicht auf das Filterarray 4 schematisch angedeutet ist. Der kleine Stellweg des XY-Verstellers bei entsprechend geringen lateralen Dimensionen der einzelnen Filter des Filterarrays 4 kann beispielsweise über einen Piezoantrieb realisiert werden. Alternativ kann auch die Lichtquelle 1 ortsfest angeordnet und das Filterarray 4 über der Lichtquelle bewegt werden. In dem Beispiel der Figur 7 werden die Filter F1 bis Fx des Filterarrays 4 nacheinander abgescannt.

Figur 8 zeigt ein Beispiel für einen photoakustischen Gassensor (PGS), wie er gemäß der vorliegenden Erfindung realisiert werden kann. Die Anordnung zur multispektralen Lichtemission, in Figur 8 durch das Modul 13 realisiert, kann prinzipiell wie bei einer der vorangehend erläuterten Ausführungsbeispiele realisiert sein und weist in diesem Beispiel ein Mikroblendenarray 11 als optische Schalteinrichtung aus. Zwischen der Lichtquelle 1 und dem Mikroblendenarray 11 ist in diesem Beispiel ein Linsenarray 8 angeordnet, durch das ein Übersprechen zwischen den einzelnen spektralen Kanälen verhindert wird. Die Linsen dieses Linsenarrays 8 kollimieren oder fokussieren das von der Lichtquelle 1 emittierte Licht in Richtung der jeweiligen Mikroblende. In diesem Beispiel ist die Elektronik des Gassensors von der Messkammer 5 getrennt. Die Messkammer verfügt über ein optisches Fenster 10 für die Einkopplung der Anregungsstrahlung. In diesem Beispiel wird das Filtersubstrat des optischen Filterarrays 4 als optisches Fenster 10 verwendet. Die Filter des Filterarrays können dabei oberhalb oder unterhalb dieses optischen Fensters angeordnet werden. Im vorliegenden Beispiel sind die Filter über dem optischen Fenster 10, also innerhalb der Messkammer 5 angeordnet. In der Messkammer 5 befindet sich ein Drucksensor als Empfänger 6, beispielsweise in Form eines MEMS-Mikrofons. Das Ausgangssignal dieses Mikrofons wird in der Signalverarbeitungs- und Auswerteeinrichtung 7 (Elektronik, Software) ausgewertet. In der linken Teilabbildung der Figur 8 ist eine Draufsicht auf das Filterarray 4 gezeigt. Auf dem Filterarray ist beispielsweise Filter 4(A) belichtet (Spot 42). Die anderen Filter des Filterarrays 4 werden nicht belichtet. Wie in den vorangegangenen Ausführungsbeispielen erläutert, können natürlich auch mehrere Filter gleichzeitig belichtet werden. Bei einem PGS-Sensor wird als Lichtquelle 1 meist eine IR-Lichtquelle verwendet, die Licht im Wellenlängenbereich von 1 bis 15 µm emittiert. Die Messkammer 5 hat mindestens einen Einlass für die Zuführung der Probe. In der Messkammer 5 können sich auch weitere Sensoren, beispielsweise für Temperatur und Feuchte, befinden.

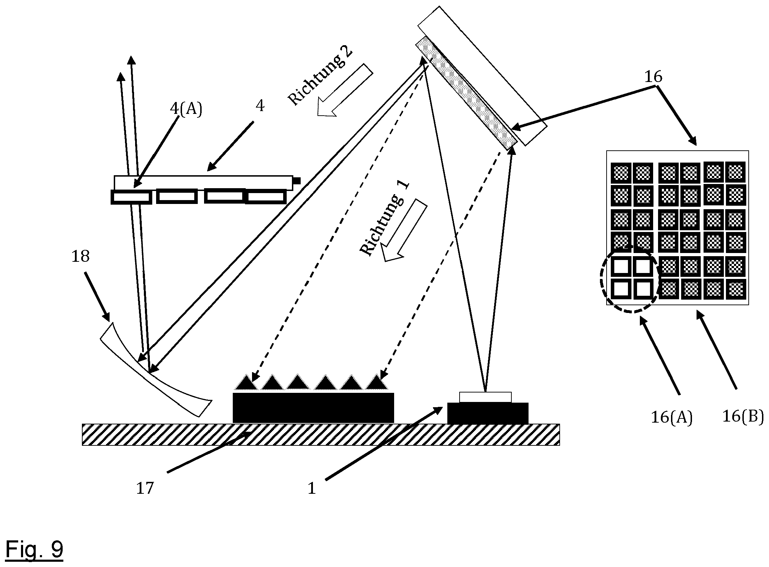

Figur 9 zeigt ein weiteres Beispiel einer Anordnung zur multispektralen Lichtemission. In diesem Beispiel wird ein Mikrospiegelarray 16 als optisches Schalterarray eingesetzt. Dieses Spiegelarray 16 kann beispielsweise ein DLP-Modul (MEMS) sein. In diesem Modul können einzelne Spiegel- oder Spiegelbereiche, also Bereiche mit mehreren Spiegeln, ein- und ausgeschaltet bzw. entsprechend verkippt werden. Die einzelnen Spiegel des Moduls können sehr klein ausgeführt werden, beispielsweise mit Abmessungen von 10 x 10 µm. In dem Beispiel der Figur 9 leiten die einzelnen Spiegel des Spiegelarrays 16 das Licht entweder in Richtung 1 oder in Richtung 2. Das Licht aus einer Lichtquelle 1 bestrahlt dabei das Spiegelarray 16. Bei Ablenkung in Richtung 2 wird der jeweilige Lichtstrahl über ein optisches System 18, beispielsweise einen konkaven Spiegel, auf das optische Filterarray 4 geleitet und belichtet beispielsweise, wie in Figur 9 skizziert, den Filter 4(A). Das optische System 18 basiert entweder auf Linsenoptik oder Spiegeloptik. Die Spiegeloptik ist bevorzugt, da die Spiegelbeschichtung eine sehr geringe Absorption in einem sehr breiten spektralen Bereich ermöglicht. Die Auswahl der einzelnen Filter des Filterarrays 4 erfolgt über die eingeschalteten Bereiche des optischen Spiegelarrays. Im vorliegenden Beispiel ist Spiegel bzw. Spiegelbereich 16(A) eingeschaltet, lenkt also das einfallende Licht in Richtung 2 ab. Der Spiegel bzw. Spiegelbereich 16(B) ist ausgeschaltet, der oder die zugehörigen Spiegel lenken also das Licht in Richtung 1 auf einen Absorber 17 ab, in dem das abgelenkte Licht absorbiert wird. Durch geeignete Ansteuerung der einzelnen Spiegel des Spiegelarrays können daher die jeweils gewünschten Filter des Filterarrays 4 belichtet werden.

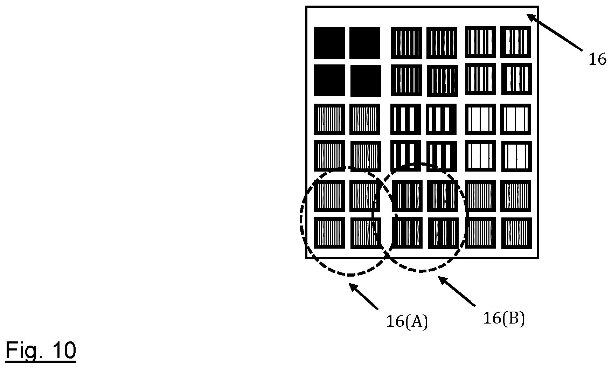

Alternativ kann das Filterarray 4 mit den einzelnen Filtern, vorzugsweise plasmonische Filter, auch direkt auf den Spiegeln des Spiegelarrays 16 aufgebracht werden, wie dies in Figur 10 schematisch angedeutet ist. Ein getrenntes Filterarray 4 wie im linken Teil der Figur 9 wird dann nicht benötigt.

Das Filterarray und das MEMS-Spiegelarray können dabei in Halbleitertechnologie zusammen realisiert werden. Der jeweilige Filter kann aus einer oder mehreren strukturierten Metallschichten oder dielektrischen Schichten bestehen. Figur 10 zeigt in Draufsicht ein Beispiel auf ein derartiges Mikrospiegelarray 16 mit aufgebrachten Filtern. In diesem Beispiel sind jeweils vier der Spiegel zu einer Gruppe bzw. einem Spiegelbereich 16(A), 16(B) ... 16 (n) zusammengefasst, die jeweils mit dem gleichen Filter beschichtet sind. Dies ist in der Figur 10 durch das jeweilige Muster angedeutet. Als Filter werden hierbei vorzugsweise Filter auf Basis von Subwellenlängen-Strukturen oder plasmonische Filter eingesetzt. Damit kann dann ein Reflexionsspektrum für fast jeden zu vermessenden Stoff durch eine Kombination unterschiedlicher Spiegelbereiche 16(A), 16(B) ... 16 (n) nachgebildet werden. Die entsprechenden Spiegel werden hierzu lediglich eingeschaltet, reflektieren also die einfallende Strahlung in die Messkammer. Auf jeden Spiegelbereich kann dabei ein spezifischer Filter, der auf eine bestimmte Wellenlänge optimiert ist, aufgebracht werden. Ein Spiegelbereich kann aus ≥ 1 Spiegel bestehen, in dem Beispiel der Figur 10 aus vier Spiegeln.

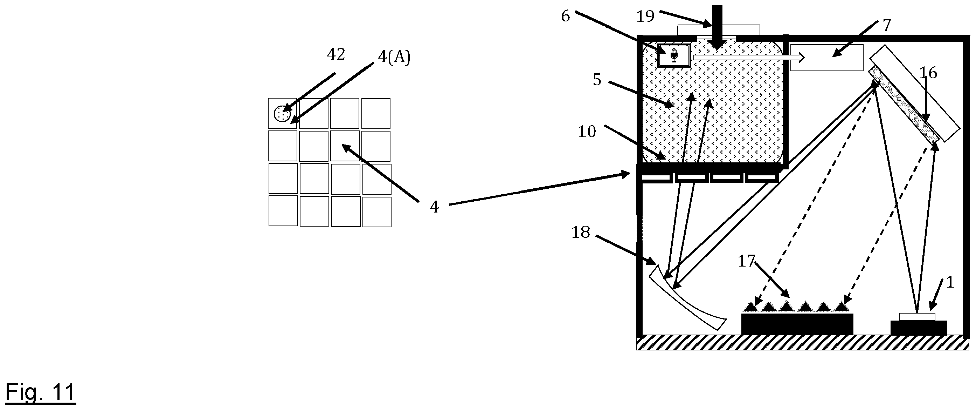

Figur 11 zeigt ein Beispiel für eine Ausgestaltung eines photoakustischen Gassensors mit der aus Figur 9 oder 10 dargestellten Anordnung zur multispektralen Lichtemission. In diesem Beispiel sind die Elektronik und die Optik von der Messkammer 5 getrennt. Die Messkammer weist ein optisches Fenster 10 auf, das auch in diesem Beispiel durch das Filtersubstrat des optischen Filterarrays 4 gebildet wird. Die Filter des Filterarrays können wiederum oberhalb oder unterhalb des optischen Fensters 10 angeordnet werden. Im vorliegenden Beispiel sind die Filter unterhalb des optischen Fensters 10 angeordnet, befindet sich also außerhalb der Messkammer. In der Messkammer 5 befindet sich wenigstens ein Drucksensor als Empfänger 6, der beispielsweise als MEMS-Mikrofon ausgebildet sein kann. Das Ausgangssignal dieses Drucksensors wird in der Signalverarbeitungs- und Auswerteeinrichtung 7 (Elektronik, Software) ausgewertet. In der linken Teilabbildung der Figur 11 ist eine Draufsicht auf das Filterarray 4 gezeigt. Auf dem Filterarray ist beispielsweise Filter 4(A) belichtet (Spot 42). Die anderen Filter des Arrays werden nicht belichtet. Wie in vorangegangenen Ausführungsbeispielen gezeigt, können natürlich auch mehrere Filter gleichzeitig belichtet werden. Als Lichtquelle 1 dient bei einem PGS-Sensor in der Regel eine IR-Lichtquelle, die in einem breiten Bereich zwischen 1 und 15 µm emittiert. Die Messkammer 5 hat wiederum mindestens einen Einlass 19 für die Zuführung der Probe. In der Messkammer können sich auch weitere Sensoren befinden, beispielsweise für die Messung von Temperatur und Feuchte.

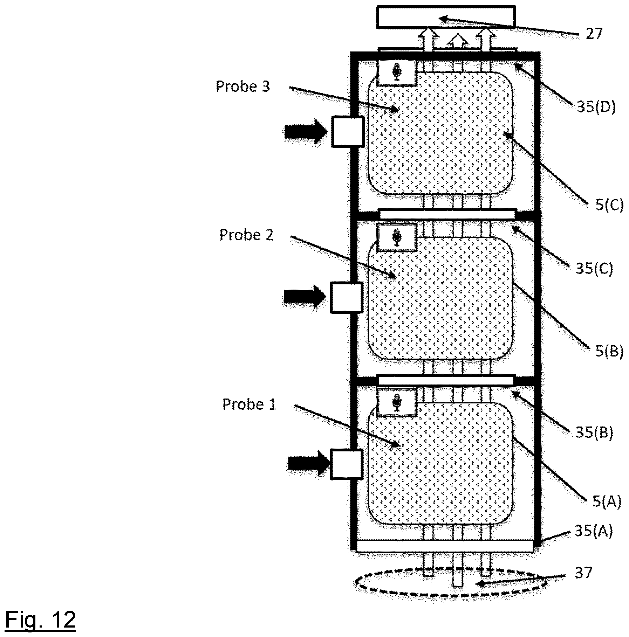

Figur 12 zeigt ein Beispiel für einen Aufbau eines Multispektralsensors gemäß der vorliegenden Erfindung, bei dem mehr als eine Messkammer verwendet wird. In diesem Beispiel sind drei Messkammern 5(A), 5(B), 5(C) in Reihe verbaut. Das ist möglich, da bei Vermessung von Gasen durch die schwache Gasabsorption das in die Messkammern eingestrahlte Anregungslicht beim Durchgang durch die Messkammern nur geringfügig abgeschwächt wird. Die Messkammern haben jeweils optische Fenster 35 (A), 35(B), 35(C), 35(D). Das Strahlenbündel 37, das von der Anordnung zur multispektralen Lichtemission emittiert wird, propagiert durch die einzelnen Kammern 5(A), 5(B), 5(C). Nach der letzten Kammer kann ein Strahlungsempfänger 27 verbaut werden. Damit können Schwankungen der Lichtleistung gemessen werden. Den Messkammern können verschiedene Proben zugeführt werden. Dabei kann es sich um unbekannte Gase oder Kalibriergase handeln. Ein Kalibriergas hat eine definierte Konzentration und ein bekanntes Spektrum. Durch die Verwendung mehrerer Messkammern kann ein Multiportsampler realisiert werden. Als Strahlungsempfänger 27 kann beispielsweise ein IR-Detektor oder eine Fotodiode eingesetzt werden.

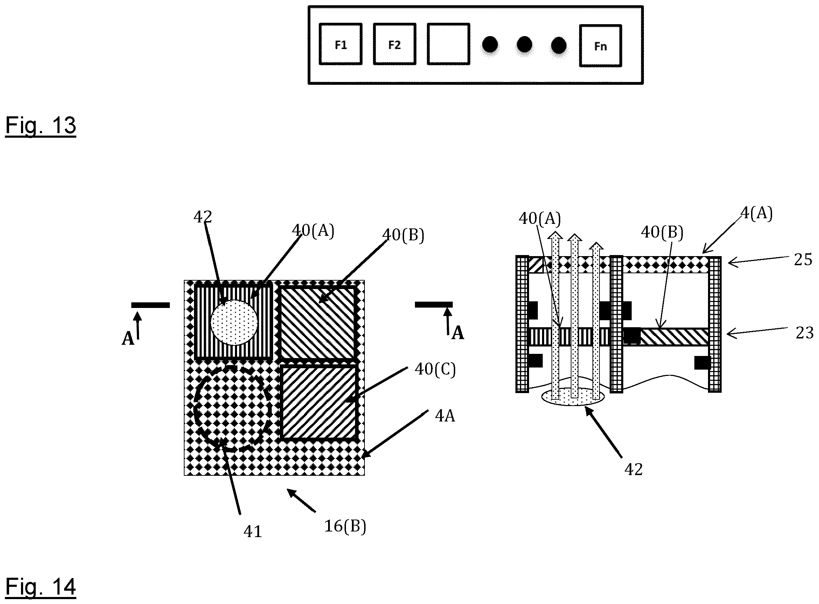

Figur 13 zeigt ein Beispiel für ein Filterarray, wie es bei der vorgeschlagenen Anordnung und dem vorgeschlagenen Multispektralsensor ebenfalls eingesetzt werden kann. Ein derartiges Filterarray, im vorliegenden Beispiel in Form eines "Infrared Linear Variable Filter", wie er beispielsweise von der Firma Vortex Optical Coatings Ltd. kommerziell erhältlich ist, kann in Dünnschicht-Technologie hergestellt werden. Diese Art von Filter verfügt über mehrere spektrale Kanäle (Bandpassfilter) und kann auf einem bestimmten spektralen Bereich optimiert werden. Das Filterarray 4 aus den vorangegangenen Ausführungsbeispielen kann durch einen derartigen Filter ersetzt werden. Die Filter F1, F2, Fn können über einen optischen Schalter einzeln oder als Gruppe belichtet werden.

Bei der vorgeschlagenen Anordnung zur multispektralen Lichtemission und dem zugehörigen Multispektralsensor können die spektralen Filter auch mit Polarisationsfiltern kombiniert werden. Figur 14 zeigt hierzu eine Kombination aus einem spektralen Filter mit mehreren Polarisationsfiltern. Absorptions- und Streuungsspektren von Stoffen können vom Polarisationszustand des Lichts abhängig sein. Aus diesem Grund können durch eine polarisierte spektrale Beleuchtung zusätzliche Informationen über einen Stoff erhalten werden. Bei den vorangegangenen Ausführungsbeispielen wurde jeweils unpolarisiertes Licht verwendet. In dem vorliegenden Beispiel wird ein spektraler Kanal bzw. Filter 4(A) mit mehreren Polarisationsfiltern 40(A), 40(B), 40(C) kombiniert. Auf Position 41 befindet sich kein Polarisationsfilter. Diese Position stellt einen Referenzkanal mit unpolarisiertem Licht dar. Über das optische Schalterarray können die Filter 40(A), 40(B), 40(C) nacheinander belichtet werden. In diesem Beispiel befindet sich der Spot 42 auf Polarisationsfilter 40(A). Das Licht nach dem spektralen Filter 4(A) hat immer das gleiche Spektrum, kann aber je nach lokaler Belichtung unterschiedlich polarisiert sein. In der rechten Teilabbildung ist ein Beispiel für einen Aufbau eines derartigen Filters in Halbleitertechnologie dargestellt. Der prinzipielle Aufbau wurde bereits im Zusammenhang mit Figur 4 erläutert. In der Metallschicht 23 sind in diesem Beispiel gitterförmige Strukturen realisiert. Diese gitterförmigen Metallstege polarisieren das Licht in Abhängigkeit vom Winkel. Im vorliegenden Beispiel werden Winkel von +90°, +45° und -45° verwendet. Darüber ist in Schicht 25 ein spektraler Filter 4(A) aufgebaut. Dieser kann beispielsweise auf Subwellenlängen-Strukturen basieren.

### Bezugszeichenliste

- 1: Lichtquelle
- 1(N): Lichtemitter
- 2: optisches Schalterarray
- 2(N): Mikroblenden
- 3(N): Elemente des Schalterarrays
- 4: Filterarray
- 4(N): ausgewählte Filter
- 5: Messkammer
- 6: Empfänger
- 7: Signalverarbeitungs- und Auswerteeinrichtung
- 8: Linsen- oder Blendenarray
- 9(N): Lichtemitter
- 10: optisches Fenster
- 11: Mikroblendenarray
- 12: XY-Versteller
- 13: Modul
- 14: Anordnung zur multispektralen Lichtemission
- 15: Messeinrichtung
- 16: Mikrospiegelarray
- 16(N): Mikrospiegel, Mikrospiegelbereich
- 17: Absorber
- 18: optisches System
- 19: Einlass
- 20: Substrat
- 21-25: Schichten
- 26: Durchgangskontaktierung (Via)
- 27: Strahlungsempfänger
- 35: optisches Fenster
- 37: Strahlenbündel
- 40: Polarisationsfilter
- 41: Position auf spektralem Filter
- 42: Belichtungsspot

## Patentansprüche

1. Anordnung zur multispektralen Lichtemission mit wenigstens
- einer breitbandigen Lichtquelle (1), die Licht eines spektralen Bereiches emittiert,
- einem Filterarray (4) aus mehreren spektralen Filtern einer spektralen Breite, die wenigstens zum Teil innerhalb des spektralen Bereiches der Lichtquelle (1) liegt, und
- einer optischen Schalteinrichtung (2) zur Steuerung eines Durchgangs des von der Lichtquelle emittierten Lichts durch das Filterarray (4), wobei die Lichtquelle (1), das Filterarray (4) und die optische Schalteinrichtung (2) so angeordnet sind, dass das von der Lichtquelle (1) emittierte Licht über die optische Schalteinrichtung (2) und das Filterarray (4) zu einem Ausgang der Anordnung geleitet wird,
- wobei die optische Schalteinrichtung (2) ein Array aus Mikrospiegeln (16) oder Mikroblenden aufweist und so ausgebildet und angeordnet ist, dass sie das von der Lichtquelle (1) emittierte Licht gezielt nur durch einen oder mehrere beliebig vorgebbare spektrale Filter des Filterarrays (4) zum Ausgang der Anordnung leiten kann, wobei jede Kombination eines oder mehrerer Elemente (3) der optischen Schalteinrichtung (2) und eines zugeordneten spektralen Filters des Filterarrays (4) einen optischen Kanal repräsentiert, **dadurch gekennzeichnet, dass** zwischen der Lichtquelle (1) und dem Filterarray (4) eine Einrichtung (8) zur Vermeidung eines optischen Übersprechens zwischen den optischen Kanälen angeordnet ist.

2. Anordnung zur multispektralen Lichtemission mit wenigstens
- einer breitbandigen Lichtquelle (1), die Licht eines spektralen Bereiches emittiert,
- einem Filterarray (4) aus mehreren spektralen Filtern einer spektralen Breite, die wenigstens zum Teil innerhalb des spektralen Bereiches der Lichtquelle (1) liegt, und
- einer Schalteinrichtung zur Steuerung eines Durchgangs des von der Lichtquelle (1) emittierten Lichts durch das Filterarray (4),
- wobei die Lichtquelle (1) ein Array von getrennt über die Schalteinrichtung ansteuerbaren Lichtemittern aufweist und so ausgebildet und angeordnet ist, dass durch Ansteuerung der Lichtemitter über die Schalteinrichtung das von der Lichtquelle (1) emittierte Licht gezielt nur durch einen oder mehrere beliebig vorgebbare spektrale Filter des Filterarrays (4) geleitet werden kann,
- wobei das Filterarray (4) direkt über dem Array von getrennt über die Schalteinrichtung ansteuerbaren Lichtemittern angeordnet ist, und
- wobei jede Kombination eines oder mehrerer Lichtemitter mit einem unmittelbar darüber angeordneten spektralen Filter des Filterarrays (4) einen optischen Kanal repräsentiert und zwischen dem Array von getrennt über die Schalteinrichtung ansteuerbaren Lichtemittern und dem Filterarray (4) eine Einrichtung zur Vermeidung eines optischen Übersprechens zwischen den optischen Kanälen angeordnet ist.

3. Anordnung nach Anspruch 1 oder 2,
**dadurch gekennzeichnet,**
**dass** die einzelnen spektralen Filter des Filterarrays (4) geringe laterale Abmessungen von ≤ 10x10 mm aufweisen.

4. Anordnung nach einem der Ansprüche 1 bis 3,
**dadurch gekennzeichnet,**
**dass** das Filterarray (4) ein auf Subwellenlängen-Strukturen basierendes oder ein plasmonisches Filter-Array ist.

5. Anordnung nach einem der Ansprüche 1 bis 4,
**dadurch gekennzeichnet,**
**dass** die spektralen Filter zeilen- und spaltenweise in dem Filterarray (4) angeordnet sind.

6. Anordnung nach einem der Ansprüche 1 und 3 bis 5 in Verbindung mit Anspruch 1,
**dadurch gekennzeichnet,**
**dass** bei Ausbildung der optischen Schalteinrichtung (2) als ein Array aus Mikrospiegeln (16) die Filter des Filterarrays (4) direkt auf den Mikrospiegeln aufgebracht sind.

7. Anordnung nach einem der Ansprüche 1 bis 6,
**dadurch gekennzeichnet,**
**dass** die spektralen Filter im Filterarray (4) mit Polarisationsfiltern (40) kombiniert sind.

8. Multispektralsensor mit
- einer Anordnung nach einem oder mehreren der vorangehenden Ansprüche,
- einer Messkammer (5), in die aus der Anordnung austretendes Licht eingekoppelt wird, und
- einem oder mehreren Detektoren (6), durch die ein Resultat einer Wechselwirkung des in die Messkammer (5) eingekoppelten Lichts mit einem in die Messkammer (5) eingebrachten Medium erfassbar ist.

9. Multispektralsensor nach Anspruch 8,
**dadurch gekennzeichnet,**
**dass** ein Eintrittsfenster (10) der Messkammer (5) durch ein Trägersubstrat des Filterarrays (4) der Anordnung gebildet ist.

10. Multispektralsensor nach Anspruch 8 oder 9, der als photoakustischer Sensor, insbesondere als photoakustischer Gassensor ausgebildet ist.

11. Multispektralsensor nach Anspruch 8 oder 9, der als Absorptionssensor oder als kombinierter Absorptions- und photoakustischer Sensor ausgebildet ist.

## Claims

1. Assembly for multispectral light emission comprising at least
- a wide-band light source (1) that emits light in a spectral range,
- a filter array (4) made up of a plurality of spectral filters having a spectral width which lies at least in part within the spectral range of the light source (1), and
- an optical switch device (2) for controlling a passage of the light emitted by the light source through the filter array (4),
wherein the light source (1), the filter array (4) and the optical switch device (2) are arranged such that the light emitted by the light source (1) is guided via the optical switch device (2) and the filter array (4) to an outlet of the assembly,
- wherein the optical switch device (2) comprises an array of micromirrors (16) or micro-diaphragms and is designed and arranged in such a way that it can selectively guide the light emitted by the light source (1) only through one or more arbitrarily specifiable spectral filters of the filter array (4) to the outlet of the assembly, wherein each combination of one or more elements (3) of the optical switch device (2) and an associated spectral filter of the filter array (4) represents an optical channel,
**characterized in**
**that** a device (8) for preventing optical crosstalk between the optical channels is arranged between the light source (1) and the filter array (4).

2. Assembly for multispectral light emission comprising at least
- a wide-band light source (1) that emits light in a spectral range,
- a filter array (4) of multiple spectral filters having a spectral width that is at least partially within the spectral range of the light source (1), and
- a switch device for controlling passage of the light emitted by the light source (1) through the filter array (4),
- wherein the light source (1) comprises an array of light emitters controllable separately via the switch device and is designed and arranged in such a way that by activating the light emitters via the switch device, the light emitted by the light source (1) can be guided in a targeted manner only through one or more arbitrarily specifiable spectral filters of the filter array (4),
- wherein the filter array (4) is arranged directly above the array of light emitters that can be activated separately via the switch device, and
- wherein each combination of one or more light emitters with a spectral filter of the filter array (4) arranged directly above represents an optical channel and a device for avoiding optical crosstalk between the optical channels is arranged between the array of light emitters which can be controlled separately via the switch device and the filter array (4).

3. Assembly according to Claim 1 or 2,
**characterized in**
**that** the individual spectral filters of the filter array (4) have small lateral dimensions of ≤10 x 10 mm.

4. Assembly according to one of Claims 1 to 3, **characterized in**
**that** the filter array (4) is a filter array based on sub-wavelength structures or a plasmonic filter array.

5. Assembly according to one of Claims 1 to 4, **characterized in**
**that** the spectral filters are arranged in rows and columns in the filter array (4).

6. Assembly according to one of Claims 1 and 3 to 5 in conjunction with Claim 1,
**characterized in**
**that** when the optical switch device (2) is designed as an array of micromirrors (16), the filters of the filter array (4) are applied directly to the micromirrors.

7. Assembly according to one of Claims 1 to 6, **characterized in**
**that** the spectral filters in the filter array (4) are combined with polarization filters (40).

8. Multispectral sensor comprising
- an assembly according to one or more of the preceding claims,
- a measuring chamber (5) into which light emerging from the assembly is coupled, and
- one or more detectors (6) by means of which a result of an interaction of the light coupled into the measuring chamber (5) and a medium introduced into the measuring chamber (5) can be detected.

9. Multispectral sensor according to Claim 8, **characterized in**
**that** an inlet window (10) of the measuring chamber (5) is formed by a carrier substrate of the filter array (4) of the assembly.

10. Multispectral sensor according to Claim 8 or 9, which is designed as a photo-acoustic sensor, in particular as a photo-acoustic gas sensor.

11. Multispectral sensor according to Claim 8 or 9, which is designed as an absorption sensor or as a combined absorption and photo acoustic sensor.

## Revendications

1. Ensemble pour l'émission de lumière multispectrale comportant au moins
- une source lumineuse à large bande (1) qui émet de la lumière d'une gamme spectrale,
- un réseau de filtres (4) composé de plusieurs filtres spectraux d'une largeur spectrale, qui se situe au moins partiellement dans la gamme spectrale de la source lumineuse (1), et
- un dispositif de commutation optique (2) pour commander un passage de la lumière émise par la source lumineuse à travers le réseau de filtres (4),
dans lequel la source lumineuse (1), le réseau de filtres (4) et le dispositif de commutation optique (2) sont disposés de telle sorte que la lumière émise par la source lumineuse (1) et le réseau de filtres (4) soit guidée par le dispositif de commutation optique (2) et le réseau de filtres (4) vers une sortie de l'ensemble,
- dans lequel le dispositif de commutation optique (2) présente un réseau de micromiroirs (16) ou de micro-ouvertures et est conçu et agencé de telle sorte qu'il puisse guider sélectivement la lumière émise par la source lumineuse (1) uniquement à travers un ou plusieurs de filtres spectraux arbitrairement prédéterminés du réseau de filtres (4) vers la sortie de l'ensemble, dans lequel chaque combinaison d'un ou plusieurs éléments (3) du dispositif de commutation optique (2) et un filtre spectral associé du réseau de filtres (4) représente un canal optique,
**caractérisé en ce que**
entre la source lumineuse (1) et le réseau de filtres (4) un dispositif (8) est agencé pour éviter la diaphonie optique entre les canaux optiques.

2. Ensemble pour l'émission de lumière multispectrale comportant au moins
- une source lumineuse à large bande (1), qui émet de la lumière dans une gamme spectrale,
- un réseau de filtres (4) constitué de plusieurs filtres spectraux d'une largeur spectrale, qui se situe au moins partiellement dans la gamme spectrale de la source lumineuse (1), et
- un dispositif de commutation pour commander un passage de la lumière émise par la source lumineuse (1) à travers le réseau de filtres (4),
- dans lequel la source lumineuse (1) présente un réseau d'émetteurs lumineux qui peuvent être commandés séparément via le dispositif de commutation et est conçue et agencée de telle manière qu'en commandant l'émetteur de lumière via le dispositif de commutation, la lumière émise par la source lumineuse (1) ne peut être guidée spécifiquement qu'à travers un ou plusieurs filtres spectraux arbitrairement prédéterminés du réseau de filtres (4),
- dans lequel le réseau de filtres (4) est disposé directement au-dessus du réseau d'émetteurs de lumière qui peuvent être commandés séparément via le dispositif de commutation, et
- dans lequel toute combinaison d'un ou plusieurs émetteurs de lumière avec un filtre spectral du réseau de filtres (4) disposé immédiatement au-dessus représente un canal optique et entre le réseau d'émetteurs de lumière qui peuvent être commandés séparément via le dispositif de commutation et le réseau de filtres (4) un dispositif destiné à empêcher la diaphonie optique entre les canaux optiques est disposé.

3. Ensemble selon la revendication 1 ou 2,
caractérisé en
les filtres spectraux individuels du réseau de filtres (4) présentent des petites dimensions latérales de ≤ 10x10 mm.

4. Ensemble selon une des revendications 1 à 3,
caractérisé en
le réseau de filtres (4) est un réseau de filtres plasmonique ou basé sur des structures sub-longueur d'onde.

5. Ensemble selon une des revendications 1 à 4,
**caractérisé en ce que**
les filtres spectraux sont disposés en rangées et en colonnes dans le réseau de filtres (4).

6. Ensemble selon une des revendications 1 et 3 à 5 en relation avec la revendication 1,
**caractérisé en ce que**
lorsque le dispositif de commutation optique (2) est conçu comme un réseau de micromiroirs (16), les filtres du réseau de filtres (4) sont appliqués directement sur les micromiroirs.

7. Ensemble selon une des revendications 1 à 6,
**caractérisé en ce que**
les filtres spectraux dans le réseau de filtres (4) sont combinés avec des filtres polarisants (40).

8. Capteur multispectral comportant
- un ensemble selon un ou plusieurs des revendications précédentes,
- une chambre de mesure (5), dans laquelle la lumière sortant du dispositif est couplée, et
- un ou plusieurs détecteurs (6), à travers lesquels un résultat d'une interaction de la lumière couplée dans la chambre de mesure (5) peut être détectée avec un milieu introduit dans la chambre de mesure (5).

9. Capteur multispectral selon la revendication 8,
**caractérisé en ce que**
une fenêtre d'entrée (10) de la chambre de mesure (5) est formée à travers un substrat support du réseau de filtres (4) de l'ensemble.

10. Capteur multispectral selon la revendication 8 ou 9, qui est configuré comme un capteur photoacoustique, notamment comme un capteur de gaz photoacoustique.

11. Capteur multispectral selon la revendication 8 ou 9,
qui est configuré comme un capteur d'absorption ou comme un capteur d'absorption et photoacoustique combiné.
